# EUROPEAN PATENT APPLICATION

(11) **EP 4 553 989 A1**
(43) Date of publication of application: **14.05.2025**
(21) Application number: 23912834.1
(22) Date of filing: 22.12.2023
(51) Int. Cl.: H01M 50/503, H01M 10/613, H01M 10/6567, H01M 10/6557, H01M 10/64, H01M 50/213, H01M 50/209, H01M 50/526, H01M 50/249

(54) **BATTERY MODULE AND BATTERY PACK COMPRISING SAME**

(30) Priority: 26.12.2022 KR 20220185076; 07.12.2023 KR 20230177036
(71) Applicant: LG Energy Solution, Ltd., Seoul 07335 (KR)
(72) Inventor: YOON, In-Se, Daejeon 34122 (KR); YANG, Jin-Oh, Daejeon 34122 (KR); PARK, Lae-Seo, Daejeon 34122 (KR)
(74) Representative: Goddar, Heinz J.
(86) International application number: PCT/KR2023/021493
(87) International publication number: WO 2024/144159

(57) **Abstract**

A battery module according to the present disclosure may include: a plurality of battery cells; and a cooling bus-bar unit including a conductive portion configured to electrically connect the plurality of battery cells to each other and a cooling portion formed integrally with the conductive portion and disposed between the battery cells so as to absorb heat from the battery cells.

## Description

### TECHNICAL FIELD

The present disclosure relates to a battery module and a battery pack including the same, and more specifically, it relates to a battery module including a cooling bus-bar unit capable of being used as an electrical connection and a cooling means for battery cells, and a battery pack including the same.

The present application claims priority to Korean Patent Application No. 10-2022-0185076 filed on December 26, 2022 and Korean Patent Application No. 10-2023-0177036 filed on December 07, 2023 in the Republic of Korea, the disclosures of which are incorporated herein by reference.

### BACKGROUND ART

Lithium secondary batteries, which have been widely used recently, have an operating voltage of about 2.5V to 4.5V per one. Therefore, in the case of electric vehicles or power storage devices that require large capacity and high output, a battery module or battery pack is configured by connecting multiple lithium secondary batteries in series and/or parallel and used as an energy source. In particular, in order to satisfy the output or capacity required for electric vehicles, a battery module or battery pack includes a large number of lithium secondary batteries.

As an example of a battery module according to the prior art, in the case of a battery module including cylindrical battery cells, the cylindrical battery cells may be connected to each other in series and/or parallel by a bus-bar plate disposed on the top thereof. The bus-bar plate is provided with a welding plate, and the positive electrode terminals (or negative electrode terminals) of the respective cylindrical battery cells and the welding plate are connected by resistance (or laser) welding or soldering.

Meanwhile, as explosions and fires caused by heat generation from battery cells have become a social issue, technology in which cooling plates (cooling tubes) are inserted between battery cells to dissipate heat from the battery cells has recently been applied to the battery module in order to prevent heat generation from the battery cells.

However, since the bus-bar plate of the electrical connection structure and the cooling tube for cooling are manufactured and supplied separately, and then assembled in the module assembly stage, the assembly works increase and the assembly process is complicated, thereby increasing tact time. The increased tact time may reduce productivity and increase the manufacturing cost of the battery pack.

### DISCLOSURE

### Technical Problem

The present disclosure has been designed to solve the problems of the related art, and therefore the present disclosure is directed to providing a battery module that includes a cooling bus-bar unit configured as a conductive portion and a cooling portion integrated thereto so as to reduce assembly works and tact time due to simplification of assembly, thereby improving productivity and reducing manufacturing cost of a battery pack, and a battery pack including the same.

The technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery module including: a plurality of battery cells; and a cooling bus-bar unit including a conductive portion configured to electrically connect the plurality of battery cells to each other and a cooling portion formed integrally with the conductive portion and disposed between the battery cells so as to absorb heat from the battery cells.

The cooling bus-bar unit may be made of electrically conductive material and may have an area in contact with the battery cells, which is insulated, and at least one area of the conductive portion electrically connected to an electrode lead of the battery cell may not be insulated.

Any one of an insulating film, a powder coating surface, and an epoxy coating layer may be applied to the insulated area in the cooling bus-bar unit.

The battery cells may be cylindrical battery cells disposed to stand upright, and the conductive portion may be disposed on the top of the cylindrical battery cells, and the cooling portion may extend downward from the conductive portion so as to be disposed between the cylindrical battery cells.

The cylindrical battery cells may be arranged in N (a natural number of N ≥ 2) rows, and the cooling bus-bar unit may be disposed between the rows of the cylindrical battery cells.

First electrode leads of the cylindrical battery cells in the left row of the conductive portion and second electrode leads of the cylindrical battery cells in the right row thereof may be wire-bonded to the conductive portion, respectively.

The conductive portion may have a width that enables the conductive portion to be seated on both the top of the cylindrical battery cells in the left row and the top of the cylindrical battery cells in the right row.

One surface of the cooling portion may be in contact with the outer circumferential surfaces of the cylindrical battery cells in the left row of the cooling portion, and the other surface may be in contact with the outer circumferential surfaces of the cylindrical battery cells in the right row of the cooling portion.

The cylindrical battery cells may be arranged in a square or rectangular configuration, and the cooling portion may extend in a straight line between the cylindrical battery cells in the N^{th} row and the cylindrical battery cells in the (N+1)^{th} row.

The cylindrical battery cells may be arranged in a triangular configuration, and the cooling portion may extend in a curved shape where peaks and valleys repeat between the cylindrical battery cells 100 in the N^{th} row and the cylindrical battery cells 100 in the (N+1)^{th} row.

The cooling bus-bar unit may include a cooling channel in which cooling water flows.

The cooling channel may be provided inside the conductive portion and the cooling portion.

The battery module may further include a cooling-medium supply/discharge unit having a cooling-medium inlet port and a cooling-medium outlet port, which communicate with the cooling channel, and connected to one end of the cooling bus-bar unit.

The battery cells may be prismatic battery cells, and the conductive portion may be disposed on top of the prismatic battery cells, and the cooling portion may be configured to extend downward from the conductive portion so as to be disposed between the prismatic battery cells.

The prismatic battery cells may be arranged in N (a natural number of N ≥ 2) rows, and the cooling bus-bar unit may be disposed between the rows of the prismatic battery cells.

One surface of the cooling portion may be in contact with the outer surfaces of the prismatic battery cells in the left row of the cooling portion, and the other surface of the cooling portion may be in contact with the outer surfaces of the prismatic battery cells in the right row of the cooling portion.

In addition, according to the present disclosure, there may be provided a battery pack including the battery module described above.

In addition, according to the present disclosure, there may be provided a vehicle including the battery pack described above.

### Advantageous Effects

According to one aspect of the present disclosure, it is possible to reduce assembly works and tact time due to simplification of assembly by the cooling bus-bar unit configured as a conductive portion and a cooling portion integrated thereto, thereby improving productivity and reducing manufacturing cost of the battery pack.

According to another aspect of the present disclosure, it is possible to suppress the risk of ignition of the battery module and delay or block heat propagation by an efficient cooling structure in which the battery cell is cooled using cooling water before the heat of the battery cell accumulates and in which the cooling medium circulates through the cooling portion and the cooling-medium supply/discharge unit.

The effects obtainable from the present disclosure are not limited to the above-mentioned effects, and other effects not mentioned above will be clearly understood by those skilled in the art to which the present disclosure pertains from the description of the invention described below.

### DESCRIPTION OF DRAWINGS

FIG. 1 is a perspective view of a battery module according to an embodiment of the present disclosure.
FIG. 2 is an exploded perspective view illustrating primary elements of a battery module according to an embodiment of the present disclosure.
FIG. 3 is a perspective view of a battery module from which a case cover is removed according to an embodiment of the present disclosure.
FIG. 4 is a perspective view of a cooling bus-bar unit and a cooling-medium supply/discharge unit in a battery module according to an embodiment of the present disclosure.
FIG. 5 is a diagram illustrating a portion of a battery module according to an embodiment of the present disclosure.
FIG. 6 is a longitudinal cross-sectional view of a battery module in the state where a cooling bus-bar unit is coupled between a pair of battery cells according to an embodiment of the present disclosure.
FIG. 7 is a perspective view of a cooling bus-bar unit and a cooling-medium supply/discharge unit in a battery module according to another embodiment of the present disclosure.
FIG. 8 is a diagram illustrating a portion of a battery module according to another embodiment of the present disclosure, which corresponds to FIG. 5.
FIG. 9 is a diagram illustrating a portion of a battery module according to another embodiment of the present disclosure, which corresponds to FIG. 5.
FIG. 10 is a diagram schematically illustrating an example of a battery module in which a cooling bus-bar is applied to prismatic battery cells in according to another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

The sizes of respective elements or specific parts of each element shown in the attached drawings are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted.

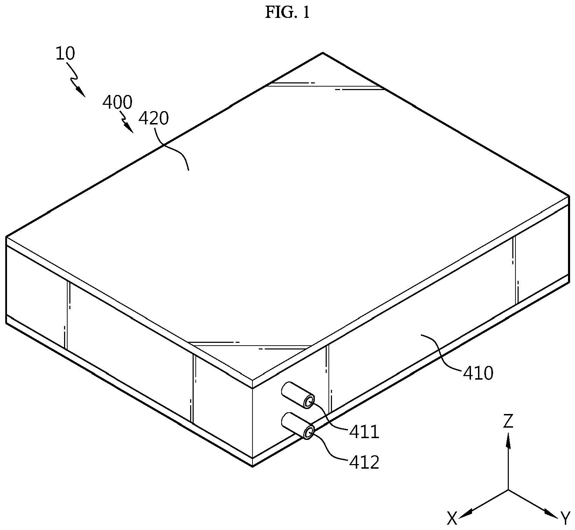

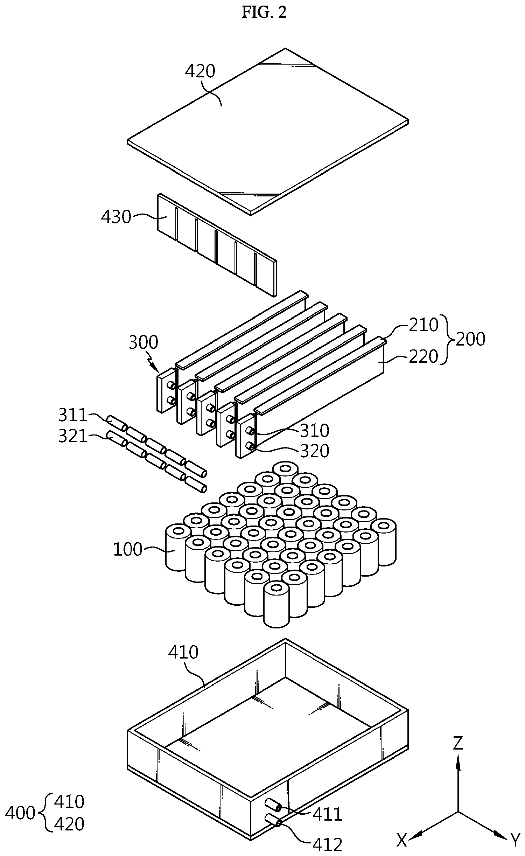

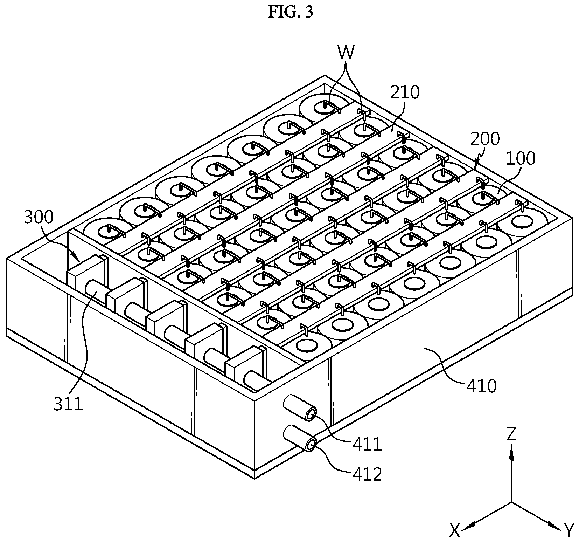

FIG. 1 is a perspective view of a battery module according to an embodiment of the present disclosure, FIG. 2 is an exploded perspective view illustrating primary elements of a battery module according to an embodiment of the present disclosure, and FIG. 3 is a perspective view of a battery module from which a case cover is removed according to an embodiment of the present disclosure.

Referring to FIGS. 1 to 3, a battery module 10 according to an embodiment of the present disclosure may include a plurality of battery cells 100, a cooling bus-bar unit 200, and a module case 400.

The plurality of battery cells 100 may be secondary batteries, such as cylindrical secondary batteries, pouch-type secondary batteries, or prismatic secondary batteries. In this embodiment, the plurality of battery cells 100 are cylindrical battery cells 100.

The cylindrical battery cell 100 includes an electrode assembly, a battery can, and a cap.

The electrode assembly may be manufactured by winding a laminate formed by sequentially stacking a first electrode (negative electrode), a separator, a second electrode (positive electrode), and a separator at least once. That is, the electrode assembly applied to the present disclosure may be a wound-type electrode assembly. In this case, an additional separator may be provided on the outer circumferential surface of the electrode assembly for insulation from the battery can. The electrode assembly may have a winding structure well known in the related art without limitation.

The battery can is a substantially cylindrical container with an opening formed on one side, and is made of a conductive metal material. The battery can is configured such that the top (or bottom) in the height direction is open and the remaining portions are closed. The battery can may receive the electrode assembly and the electrolyte through an opening formed on one side in the height direction. In addition, the opening of the battery can is sealed with a cap.

Meanwhile, in an embodiment of the present disclosure, the entire surface of the battery can may function as a negative electrode terminal. For example, in the cylindrical battery cell 100, a negative electrode collector connected to the negative electrode of the electrode assembly is accommodated inside the battery can, and the negative electrode collector is in contact with the inner side of the battery can, so that the entire surface of the battery can may function as a negative electrode terminal.

A positive electrode terminal may be provided on the opposite side of the opening of the battery can so as to penetrate through the battery can and be electrically connected to the positive electrode of the electrode assembly. The positive electrode terminal may be configured in, for example, a riveted structure. The positive electrode terminal is insulated from the battery can by an insulating gasket so as to have positive electrode polarity. Meanwhile, unlike this embodiment, the cap for sealing the opening and the positive electrode of the electrode assembly may be electrically connected to use the cap as a positive electrode terminal.

Therefore, the battery module 10 according to an embodiment of the present disclosure, when electrically connecting a plurality of cylindrical battery cells 100, may connect both the positive electrode and the negative electrode in one direction, thereby simplifying the electrical connection structure.

These cylindrical battery cells 100 may be disposed while standing upright as shown in FIG. 2 and may be arranged in the horizontal direction or on a horizontal plane (X-Y plane). The cylindrical battery cells 100 may be arranged in a square or rectangular configuration. The cylindrical battery cells 100, when arranged in a square or rectangular configuration, may be arranged in a check-board pattern, and a predetermined gap may be formed between the cylindrical battery cells 100.

Specifically, the cylindrical battery cells 100 may be arranged in N (a natural number of N ≥ 2) rows, and a plurality of cylindrical battery cells 100 may be arranged in each row. That is, N rows are sequentially arranged in the Y-axis direction, and a plurality of cylindrical battery cells 100 may be arranged in the X-axis direction in each row. In the present embodiment, the cylindrical battery cells 100 may be configured in 6 rows, that is, N = 6, and 7 cylindrical battery cells 100 may be arranged in one row. Meanwhile, the number of rows and the number of cylindrical battery cells 100 arranged in each row may be changed in various ways.

The cooling bus-bar unit 200 is a component that simultaneously performs electrical connection and cooling for the cylindrical battery cells 100, and may include a conductive portion 210 electrically connected to the electrode lead of the cylindrical battery cell 100, and a cooling portion 220 that is formed integrally with the conductive portion 210 and comes into contact with the outer circumferential surface of the cylindrical battery cell to absorb heat.

The conductive portion 210 may electrically connect the plurality of battery cells 100 to each other. The conductive portion 210 may provide a bonding area (for example, the upper surface of the conductive portion 210) for wire bonding with the electrode leads of the plurality of battery cells 100. The conductive portion 210 may be disposed on the top of the cylindrical battery cells 100 and electrically connected to the electrode leads of the battery cells 100. At least one area of the conductive portion 210, which is electrically connected to the electrode lead of the battery cell 100, may not be insulated.

The cooling portion 220 may be disposed between the battery cells 100 to absorb heat from the battery cells 100. To this end, the cooling portion 220 may extend downward from the conductive portion 210 to be interposed between the cylindrical battery cells 100. The cooling portion 220 may come into contact with the outer circumferential surface of the battery can to absorb heat. The surface of the cooling portion 220 may be insulated.

The conductive portion 210 and the cooling portion 220 may be integrally formed and made of a metal material with excellent electrical conductivity and thermal conductivity. The cooling bus-bar unit 200 may be manufactured by extrusion processing or injection molding, and may be preferably manufactured by extrusion processing. For example, the metal material may be copper (Cu), aluminum (Al), nickel (Ni), an alloy thereof, or a clad metal made by bonding different types of metals.

The cooling bus-bar unit 200 may be arranged between the N^{th} row (a natural number of N≥2) and the (N+1)^{th} row of the cylindrical battery cells 100. The cooling bus-bar unit 200 may be disposed between a pair of rows arranged in the Y-axis direction. For example, as shown in FIG. 3, the plurality of cylindrical battery cells 100 may be arranged in 6 rows, and the cooling bus-bar units may be disposed in the space between adjacent rows.

Specifically, the conductive portion 210 may be disposed on the top of the cylindrical battery cells 100, and the cooling portion 220 may extend downward from the conductive portion 210 to be disposed between the cylindrical battery cells 100 in adjacent rows.

In addition, it may be provided such that one surface of the cooling portion 220 is in contact with the outer circumferential surfaces of the cylindrical battery cells 100 in the left row of the cooling portion 220 and such that the other surface of the cooling portion 220 is in contact with the outer circumferential surfaces of the cylindrical battery cells 100 in the right row of the cooling portion 220.

Meanwhile, a cooling-medium supply/discharge unit 300 may be further connected to one side of the cooling bus-bar unit 200. In addition, the cooling-medium supply/discharge unit 300 may be an element that supplies and discharges a cooling medium to and from the cooling portion 220. The cooling-medium supply/discharge unit 300 may be configured to communicate with the cooling portion 220, and the cooling-medium supply/discharge unit 300 may include a cooling-medium inlet port 310 and a cooling-medium outlet port 320.

The module case 400 may accommodate the cylindrical battery cells 100. The module case 400 may include a case body 410 with an top opening, and a case cover 420 that covers the opening.

The case body 410 may be provided with a partition 430 that separates the cylindrical battery cells 100 and the cooling-medium supply/discharge units 300 from each other. The partition 430 may be disposed between the plurality of cooling bus-bar units 200 and the plurality of cooling-medium supply/discharge units 300 to space them apart from each other and separate them. The plurality of cooling-medium supply/discharge units 300 connected to the plurality of cooling bus-bar units 200 may be configured to be connected by connection pipes. The connection pipes may include an inlet pipe 311 and an outlet pipe 321. A case inlet 411 and a case outlet 412 connected to the inlet pipe 311 and the outlet pipe 321, respectively, may be provided on one side of the case body 410.

Hereinafter, the cooling bus-bar unit 200 will be described in more detail.

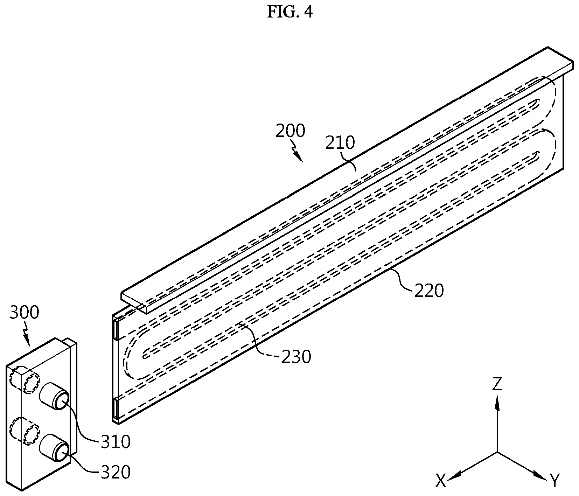

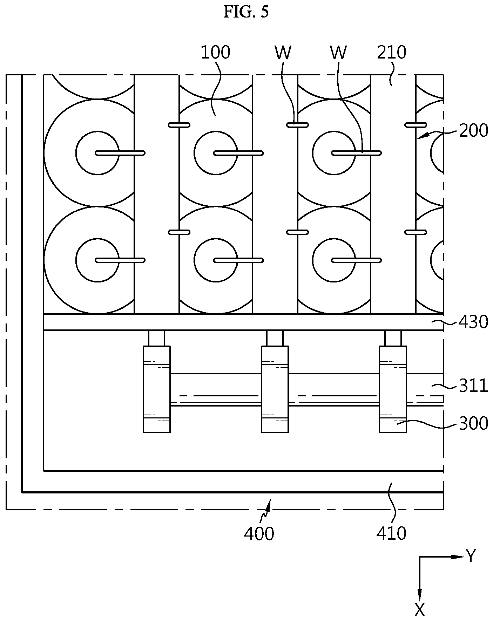

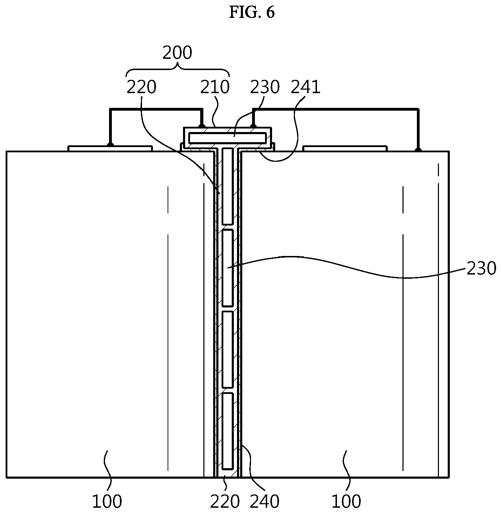

FIG. 4 is a perspective view of a cooling bus-bar unit and a cooling-medium supply/discharge unit in a battery module according to an embodiment of the present disclosure, FIG. 5 is a diagram illustrating a portion of the top of a battery module according to an embodiment of the present disclosure, and FIG. 6 is a longitudinal cross-sectional view of a battery module in the state where a cooling bus-bar unit is coupled between a pair of battery cells according to an embodiment of the present disclosure.

Referring to FIGS. 4 to 6, the cooling bus-bar unit 200 may include a conductive portion 210 that electrically connects a plurality of battery cells 100 to each other, and a cooling portion 220 that is formed integrally with the conductive portion 210 and disposed between the battery cells 100 to absorb heat from the battery cells 100.

The conductive portion 210 may be disposed on the top of the cylindrical battery cells 100. The conductive portion 210 may be disposed in a direction (the X-axis direction) parallel to each row of the cylindrical battery cells 100, and may have a predetermined width in the horizontal direction (the arrangement direction of respective rows, i.e., the Y-axis direction). The conductive portion 210 may have a width that enables the conductive portion 210 to be seated on both the top of the cylindrical battery cells 100 in the left row and the top of the cylindrical battery cells 100 in the right row.

In addition, first electrode leads of the cylindrical battery cells 100 in the left row of the conductive portion 210 and second electrode leads of the cylindrical battery cells 100 in the right row of the conductive portion 210 may be respectively connected to the conductive portion 210 by wires W.

For example, in the implemented configuration shown in FIG. 3, the positive electrode terminals of the cylindrical battery cells 100 arranged in the first row may be electrically connected to the conductive portion 210 by wires W, and the negative electrode terminals of the battery cells 100 arranged in the second row adjacent to the first row may be electrically connected to the conductive portion 210 by wires W. The cylindrical battery cells 100 in the second and third rows may be electrically connected to the conductive portion 210 therebetween, and the cylindrical battery cells 100 in the third and fourth rows may be electrically connected to the conductive portion 210 therebetween in the same manner. In this case, the battery cells 100 arranged in the same row are connected to each other in parallel, and the battery cells 100 arranged in neighboring rows are connected to each other in series.

The conductive portion 210 may be integrally formed with the cooling portion interposed between the cylindrical battery cells 100 so as to be restricted from moving in the left and right directions (the ±Y-axis directions). Therefore, the conductive portion 210 may be disposed on the top of the cylindrical battery cells 100 without a separate support component and, after being disposed, stably maintained without moving in the left and right directions. Therefore, according to the present embodiment, the distance between the cylindrical battery cells 100 in each row and the conductive portion 210 of each cooling bus-bar unit 200 is constant, thereby facilitating the wire-bonding work and, stably maintaining the wire-bonded state after the work.

The cooling portion 220 extends downward (in the vertical direction) from the center of the conductive portion 210 to be disposed in a space between two battery cells 100 facing each other. The cooling portion 220 may be interposed between the rows of the cylindrical battery cells 100. One surface of the cooling portion 220 may be in contact with the outer circumferential surfaces of the cylindrical battery cells 100 in the left row of the cooling portion 220, and the other surface may be in contact with the outer circumferential surfaces of the cylindrical battery cells 100 in the right row of the cooling portion 220. As the cooling portion 220 is in partial contact with the outer circumferential surfaces of the cylindrical battery cells 100, it may efficiently cool the cylindrical battery cells 100.

The cooling portion 220 may extend in a straight line between the cylindrical battery cells 100 in the N^{th} row and the cylindrical battery cells 100 in the (N+1)^{th} row. That is, the cylindrical battery cells 100 may be arranged in a square or rectangular configuration, and the cooling portion 220 disposed between the rows of the cylindrical battery cells 100 may be provided in a straight shape.

The cooling bus-bar unit 200 may have a cooling channel 230 through which a cooling medium may flow. The cooling medium may be cooling water.

According to the above configuration, if cooling water is supplied to the cooling channel 230, the cooling bus-bar unit 200 may remain at a low temperature. In this case, the thermal gradient between the battery cells 100 and the cooling bus-bar unit 200 may be maximized, so that the heat of the battery cells may be transferred more quickly and effectively to the cooling bus-bar unit 200.

The cooling channel 230 according to this embodiment may be provided inside the cooling portion 220, as shown in FIG. 4. A cooling-medium supply/discharge unit 300 may be connected to one side of the cooling bus-bar unit 200. The cooling-medium supply/discharge unit 300 may include a cooling-medium inlet port 310 communicating with the inlet of the cooling channel 230 and a cooling-medium outlet port 320 communicating with the outlet of the cooling channel 230. In addition, referring to FIGS. 3 and 5, the cooling-medium supply/discharge units 300 connected one-to-one to the cooling bus-bar units 200 may be connected to communicate with each other through connection pipes 311 and 321. The connection pipes include an inlet pipe 311 connected to the cooling-medium inlet port 310 of each cooling-medium supply/discharge unit 300 and an outlet pipe 321 connected to the cooling-medium outlet port 320 of each cooling-medium supply/discharge unit 300. The inlet pipe 311 and the outlet pipe 321 may be connected to the case inlet 411 and the case outlet 412 provided on one side of the case body 410. According to this implemented configuration, the cooling medium may be supplied from an external water source into the battery module 10 through the case inlet 411 and then distributed to the cooling-medium supply/discharge units 300 connected one-to-one with the cooling bus-bar units through the inlet pipe 311.

In addition, the cooling medium may flow in through the cooling-medium inlet port 310 located in the upper portion of each cooling-medium supply/discharge unit 300, circulate in the longitudinal direction of the cooling portion 220 through the cooling channel 230 of the cooling portion 220, and exit through the cooling-medium outlet port 320 located in the lower portion of the cooling-medium supply/discharge unit 300. The cooling medium that absorbs heat in the cooling channel 230 may move along the outlet pipe 321 connected to the cooling-medium outlet port 320 of each cooling-medium supply/discharge unit 300 and exit to the outside of the battery module 10 through the case outlet 412. In this process, heat exchange may be performed between the cooling portion 220 and the cylindrical battery cells 100, thereby cooling the cylindrical battery cells 100.

The cooling channel 230 may be provided in at least one of the conductive portion 210 and the cooling portion 220. For example, as shown in FIG. 6, the cooling channel 230 may be provided in the conductive portion 210, as well as in the cooling portion 220. In this case, although not shown, an insulating means may be provided on the inner side of the conductive portion 210 where the cooling channel 230 is formed.

The cooling bus-bar unit 200 needs to be insulated from the cylindrical battery cell 100 because it is made of an electrically conductive material. Accordingly, in this embodiment, the area of the cooling bus-bar unit 200 in contact with the battery cells 100 may be insulated, and at least one area of the conductive portion 210 electrically connected to the electrode lead of the battery cell 100 may not be insulated.

The cooling portion 220 has an electrically insulated area 240. In this case, any one of an insulating film, a powder coating surface, and an epoxy coating layer may be applied to the insulated area.

The conductive portion 210 may also have an insulated area 241. In particular, the area requiring insulation in the conductive portion 210 may be the lower surface of the conductive portion 210 that intersects the cooling portion 220 and is disposed on the top of the battery cell.

The conductive portion 210 and the cylindrical battery cell 100 may be electrically insulated through the insulated area 241 provided on the lower surface of the conductive portion 210. Like the cooling portion 220 described above, any one of an insulating film, a powder coating surface, and an epoxy coating layer may be applied to the insulated area 241. As an alternative, an insulating gasket or a rubber O-ring may be applied between the lower surface of the conductive portion 210 and the top of the battery cell.

Hereinafter, the assembly process of the battery module 10 according to the present embodiment will be briefly described.

First, a cooling bus-bar unit 200 may be provided. The cooling bus-bar unit 200 may be manufactured by extrusion molding, and additional processes may be required to form the internal cooling channel 230.

Next, the cylindrical battery cells 100 are accommodated in the case body 410 in a rectangular configuration, and then the cooling bus-bar units 200 are disposed. In this process, the cooling bus-bar unit 200 may be disposed in a space between respective rows of the cylindrical battery cells 100. Since the cooling bus-bar unit 200 is provided as an integrated unit, it is possible to solve the problem of the existing bus-bar plate and cooling tube that are separately provided and assembled to increase the assembly works. Since the cooling portion 220 is vertically inserted and disposed between the rows of the cylindrical battery cells 100, arrangement of the conductive portion 210 and alignment of the cylindrical battery cells 100 may be completed, thereby reducing assembly works.

Next, a plurality of cooling-medium supply/discharge units 300 is connected to the cooling bus-bar units 200, respectively. Then, a partition 430 is assembled between the plurality of battery cells arranged in rows and columns and the cooling-medium supply/discharge units. The partition 430 may be configured to have slits into which the connection portions of the cooling bus-bar units 200 and the cooling-medium supply/discharge units 300 may be inserted. When the partition 430 is assembled, as shown in FIG. 3, the cooling bus-bar units 200 may be kept at regular intervals by the partition 430, and the battery cells may be densely accommodated in a space surrounded by the partition 430 and the outer walls of the case body 410.

Next, a wire bonding is performed between the plurality of cooling bus-bar units 200 and the cylindrical battery cells, and the cooling-medium supply/discharge units 300 and the case inlet 411 and case outlet 412 may be connected by the connection pipes 311 and 321. In addition, the case cover 420 may be assembled to the case body 410.

The configuration of the battery module according to an embodiment of the present disclosure described above may reduce the assembly works of the battery module. In particular, in the battery module 10, electrical connection and cooling for the battery cells 100 may be performed through the cooling bus-bar unit 200, thereby simplifying the assembly structure and assembly processes.

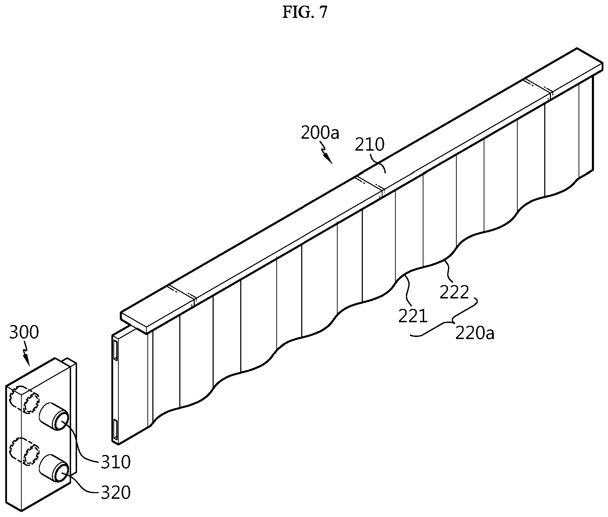

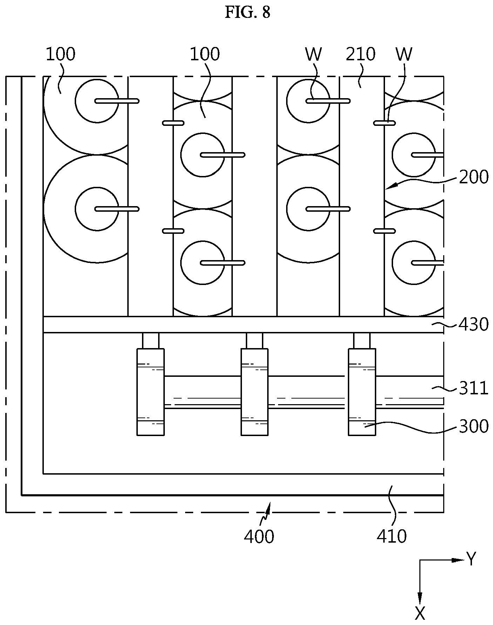

FIG. 7 is a perspective view of a cooling bus-bar unit and a cooling-medium supply/discharge unit in a battery module according to another embodiment of the present disclosure, and FIG. 8 is a diagram illustrating a portion of the top of a battery module according to another embodiment of the present disclosure.

Subsequently, another embodiment of the present disclosure will be briefly described with reference to FIGS. 7 and 8.

The same reference numbers as those in the previous drawings indicate the same members, and redundant descriptions of the same members will be omitted and a description will be made based on the differences from the above-described embodiment.

In the battery module according to another embodiment of the present disclosure, a cooling portion 220a of a cooling bus-bar unit 200a may have various shape depending on the arrangement of the cylindrical battery cells 100 in the battery module 10.

That is, the cylindrical battery cells 100 according to the present embodiment may be arranged in a triangular or staggered array inside the module case 400. In this triangular array, the energy density may be maximized at the same volume.

The cooling bus-bar unit 200a also varies corresponding to the arrangement of the above cylindrical battery cells 100. In particular, the shape of the cooling portion 220a may vary. That is, the cooling portion 220a may extend in a curved shape where peaks 221 and valleys 222 repeat between the cylindrical battery cells 100 in the N^{th} row and the cylindrical battery cells 100 in the (N+1)^{th} row. That is, the outer surface of the cooling portion 220a may have a wave shape.

For example, as shown in FIG. 8, the cylindrical battery cells 100 in the first row and the cylindrical battery cells 100 in the second row may be arranged to be staggered in the horizontal direction. In this case, the cooling portion 220a manufactured in the form shown in FIG. 7 may be inserted between the rows of the cylindrical battery cells 100, thereby improving the contact between the cooling portion 220a and the cylindrical battery cells 100 and reducing dead space inside the battery module 10.

Accordingly, the cooling portion 220a according to this embodiment may have higher cooling efficiency than the previous embodiment. The contact area between the cylindrical battery cells 100 and the outer surface of the cooling portion 220 may increase, so that heat exchange may be more effectively performed, thereby improving cooling efficiency.

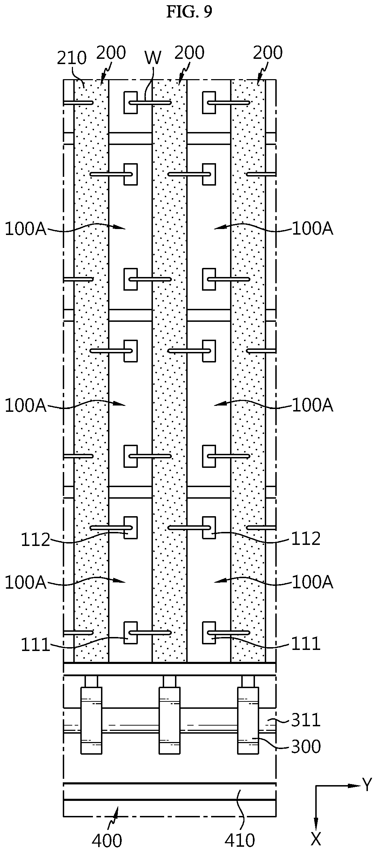

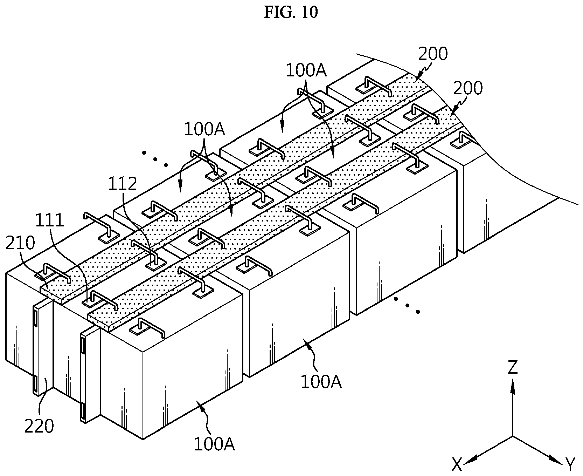

Next, another embodiment of the present disclosure will be briefly described with reference to FIGS. 9 and 10.

FIG. 9 is a diagram illustrating a portion of a battery module according to another embodiment of the present disclosure, which corresponds to FIG. 5, and FIG. 10 is a diagram schematically illustrating an example of a battery module in which a cooling bus-bar is applied to prismatic battery cells in according to another embodiment of the present disclosure.

The same reference numbers as those in the previous drawings indicate the same members, and redundant descriptions of the same members will be omitted and a description will be made based on the differences from the above-described embodiment.

The battery module according to another embodiment of the present disclosure differs from the battery module according to the embodiment in FIG. 1 in that the cylindrical battery cell 100 is replaced with a prismatic battery cell 100A.

Here, the prismatic battery cell 100A indicates a battery cell that is substantially in a cuboid shape. The prismatic battery cell 100A may be obtained by storing an electrode assembly in a battery can, made of aluminum and having a top opening, and coupling a cap plate to the top opening of the battery can. The prismatic battery cell 100A may include a positive electrode terminal 111 that is connected to a positive electrode plate constituting the electrode assembly and protrudes to the outside of the cap plate while passing through the cap plate, and a negative electrode terminal 112 that is connected to a negative electrode plate constituting the electrode assembly and protrudes to the outside of the cap plate while passing through the cap plate.

Referring to FIGS. 9 and 10, the prismatic battery cells 100A may be arranged in N (a natural number of N ≥ 2) rows, and a cooling bus-bar unit 200 may be disposed between the rows of the prismatic battery cells 100A.

A conductive portion 210 of the cooling bus-bar unit 200 may be disposed on the top of the prismatic battery cells 100A, and a cooling portion 220 of the cooling bus-bar unit 200 may extend downward from the conductive portion 210 so as to be disposed between the prismatic battery cells 100A.

The conductive portion 210 may be configured to be electrically connected to the positive electrode terminals 111 of the prismatic battery cells 100A in the left row of the conductive portion 210 and to be electrically connected to the negative electrode terminals 112 of the prismatic battery cells 100A in the right row of the conductive portion 210.

If N rows of prismatic battery cells 100A are electrically connected to the conductive portions 210 of the corresponding cooling bus-bar units 200 in such a pattern, the prismatic battery cells 100A disposed in the same row may be connected in parallel to each other, and the prismatic battery cells 100A disposed in neighboring rows may be connected in series to each other. Electrical connection between the electrode leads of the prismatic battery cells 100A and the conductive portion 210 may be performed by, for example, one of wire bonding, soldering, bolting, or the like
In addition, the left side of the cooling portion 220 may be in contact with the right sides of the prismatic battery cells 100A in the left row of the cooling portion 220, and the right side of the cooling portion 220 may be in contact with the left sides of the prismatic battery cells 100A in the right row of the cooling portion 220.

Likewise, the cooling bus-bar unit 200 according to the present disclosure may also be applied to the electrical connection and cooling of the prismatic battery cells 100A.

Meanwhile, a battery pack (not shown) according to the present disclosure may include one or more of the battery modules 10 described above. The battery pack according to the present disclosure may further include a master BMS (Battery Management System) for integrated control of charging and discharging of one or more battery modules 10, a current sensor, a fuse, or the like, and a pack case to accommodate the above-mentioned components.

The battery pack according to the present disclosure may be applied to energy storage devices or to vehicles such as electric scooters, electric vehicles, or hybrid vehicles. That is, a vehicle according to the present disclosure may include the battery pack according to the present disclosure. The battery pack may be installed in the car-body frame under the vehicle seat or in a trunk space, and the arrangement of the battery pack may be reversed if necessary when installed in the vehicle.

Although terms indicating directions such as up, down, left, right, front, and rear directions are used in this specification, it is obvious to those skilled in the art that these terms are only for convenience of explanation and may vary depending on the location of the target object or the location of the observer.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

## Claims

1. A battery module comprising:
a plurality of battery cells; and
a cooling bus-bar unit comprising a conductive portion configured to electrically connect the plurality of battery cells to each other and a cooling portion formed integrally with the conductive portion and disposed between the battery cells so as to absorb heat from the battery cells.

2. The battery module according to claim 1,
wherein the cooling bus-bar unit is made of electrically conductive material and has an area in contact with the battery cells, which is insulated, and
wherein at least one area of the conductive portion electrically connected to an electrode lead of the battery cell is not insulated.

3. The battery module according to claim 2,
wherein any one of an insulating film, a powder coating surface, and an epoxy coating layer is applied to the insulated area in the cooling bus-bar unit.

4. The battery module according to claim 1,
wherein the battery cells are cylindrical battery cells disposed to stand upright,
wherein the conductive portion is disposed on top of the cylindrical battery cells, and
wherein the cooling portion extends downward from the conductive portion so as to be disposed between the cylindrical battery cells.

5. The battery module according to claim 4,
wherein the cylindrical battery cells are arranged in N (a natural number of N≥2) rows, and
wherein the cooling bus-bar unit is disposed between the rows of the cylindrical battery cells.

6. The battery module according to claim 5,
wherein first electrode leads of the cylindrical battery cells in the left row of the conductive portion and second electrode leads of the cylindrical battery cells in the right row of the conductive portion are wire-bonded to the conductive portion, respectively.

7. The battery module according to claim 6,
wherein the conductive portion has a width that enables the conductive portion to be seated on both the top of the cylindrical battery cells in the left row and the top of the cylindrical battery cells in the right row.

8. The battery module according to claim 5,
wherein one surface of the cooling portion is in contact with the outer circumferential surfaces of the cylindrical battery cells in the left row of the cooling portion and the other surface is in contact with the outer circumferential surfaces of the cylindrical battery cells in the right row of the cooling portion.

9. The battery module according to claim 5,
wherein the cylindrical battery cells are arranged in a square or rectangular configuration, and
wherein the cooling portion extends in a straight line between the cylindrical battery cells in the N^{th} row and the cylindrical battery cells in the (N+1)^{th} row.

10. The battery module according to claim 5,
wherein the cylindrical battery cells are arranged in a triangular configuration, and
wherein the cooling portion extends in a curved shape where peaks and valleys repeat between the cylindrical battery cells 100 in the N^{th} row and the cylindrical battery cells 100 in the (N+1)^{th} row.

11. The battery module according to claim 1,
wherein the cooling bus-bar unit comprises a cooling channel in which cooling water flows.

12. The battery module according to claim 11,
wherein the cooling channel is provided inside the conductive portion and the cooling portion.

13. The battery module according to claim 11,
further comprising a cooling-medium supply/discharge unit having a cooling-medium inlet port and a cooling-medium outlet port, which communicate with the cooling channel, and connected to one end of the cooling bus-bar unit.

14. The battery module according to claim 1,
wherein the battery cells are prismatic battery cells,
wherein the conductive portion is disposed on top of the prismatic battery cells, and
wherein the cooling portion is configured to extend downward from the conductive portion so as to be disposed between the prismatic battery cells.

15. The battery module according to claim 14,
wherein the prismatic battery cells are disposed in N (a natural number of N ≥ 2) rows, and
the cooling bus-bar unit is disposed between the rows of the prismatic battery cells.

16. The battery module according to claim 15,
wherein one surface of the cooling portion is in contact with the outer surfaces of the prismatic battery cells in the left row of the cooling portion and the other surface of the cooling portion is in contact with the outer surfaces of the prismatic battery cells in the right row of the cooling portion.

17. A battery pack comprising the battery module according to any one of claims 1 to 16.

18. A vehicle comprising the battery pack according to claim 17.
